# FASCICULE DE BREVET EUROPEEN

(11) **EP 2 646 376 B1**
(45) Date de publication et mention de la délivrance du brevet: **29.10.2014**
(21) Numéro de dépôt: 11801784.7
(22) Date de dépôt: 29.11.2011
(51) Int. Cl.: C03B 27/044, C03B 27/04, B05B 1/00

(54) **BUSE POUR DISPOSITIF DE TREMPE**
DÜSE FÜR EINE TEMPERVORRICHTUNG
NOZZLE FOR A TEMPERING DEVICE

(30) Priorité: 01.12.2010 FR 1059968
(43) Date de publication de la demande: 09.10.2013
(73) Titulaire: Saint-Gobain Glass France, 92400 Courbevoie (FR)
(72) Inventeur: VON DER OHE, Renate, F-94120 Fontenay Sous Bois (FR); THUILLIER, Sébastien, 600040 CHENNAI TAMILNADU (IN); FAHL, Fouad, F-60200 Compiegne (FR)
(74) Mandataire: Colombier, Christian
(86) Numéro de dépôt international: PCT/FR2011/052804
(87) Numéro de publication internationale: WO 2012/072939

(56) Documents cités:
- EP-A1- 1 462 420
- BE-A- 518 344
- JP-A- 2000 281 370
- US-A- 3 388 984

## Description

L'invention concerne un dispositif pour le refroidissement de feuilles de verre par des jets d'air émis par des buses.

La rapidité avec laquelle un verre est refroidi joue sur ses propriétés mécanique et notamment son comportement aux chocs et sa dureté de surface. On peut laisser le verre se refroidir lentement, généralement dans une étenderie. Dans ce cas, le verre final est découpable mais quand il se brise, il se transforme en grand morceaux aux tranches coupantes, ce qui est parfois jugé non satisfaisant sur le plan de la sécurité. Pour donner au verre des propriétés chocs améliorées (fracture en petits morceaux non coupants), on peut le semi-durcir, le durcir ou le tremper, ce qui peut être obtenu par un refroidissement plus rapide. Ce refroidissement accéléré du verre est habituellement réalisé par soufflage d'air froid sur le verre chaud par l'intermédiaire de buses.

De nombreux types de buses ont déjà été décrits. Notamment, les WO00/23387, WO99/12855, WO2006/076215, US3881907 enseignent des buses en forme de tuyaux placés horizontalement sous les feuilles en défilement et dont la longueur (à l'horizontale) correspond à la largeur des feuilles à refroidir. Les buses sont percées de trous ou comprennent une fente pour l'éjection de l'air vers le verre. La buse est donc ici un tuyau horizontal fermé à un bout et disposé transversalement par rapport à la direction de défilement du verre.

Le US3393062 enseigne des buses en forme de tubes finissant en cône dont la section s'élargie dans le sens d'écoulement du flux d'air. Les US2948990, US4519829 et US4578102 enseignent des buses en forme de tubes finissant en cône dont la section diminue dans le sens d'écoulement du flux d'air.

Le US5562750 enseigne des buses en forme de cône dont la section s'élargie dans le sens d'écoulement du flux d'air, la buse finissant par une grille.

Le JP 2000 281370 A enseigne des buses selon le préambule de la revendication 1.

La buse selon l'invention procure un fort échange thermique lors du refroidissement de feuilles de verre. Ceci permet d'augmenter l'effet de renforcement sur le verre et/ou de diminuer la puissance des ventilateurs servant à véhiculer l'air au travers des buses. L'augmentation de l'effet de renforcement se traduit par une augmentation du nombre de morceau de verre par unité de surface dans un test de rupture, par exemple selon la norme ECE R43. Le coefficient d'échange procuré par la buse est non seulement bon par rapport au point de la surface de verre directement vis-à-vis de l'orifice d'éjection de l'air par la buse, mais aussi autour de ce point à une certaine distance notamment jusqu'à 30 cm.

La buse est destinée à équiper un dispositif de refroidissement de feuilles de verre par soufflage d'air plus froid que le verre. Le refroidissement procure un durcissement de la surface (le terme durcissement recouvrant le semi-durcissement et la trempe). Pour ce refroidissement, l'air commence à être soufflé alors que le verre est à une température d'au moins 580 et généralement au moins 610°C. Au début du soufflage, le verre est généralement à une température comprise entre 610 et 650 °C. L'air émis par la buse est généralement de l'air à la température ambiante ou légèrement chauffé du fait qu'il est entraîné par un ventilateur légèrement chauffé (la température de l'air soufflé est généralement entre 0 et 60°C, voire plus chaud selon les conditions de travail).

L'invention concerne également un dispositif comprenant une multiplicité de buses selon l'invention. Ces buses sont fixées à au moins un caisson alimenté en air. Les buses reçoivent l'air de refroidissement du caisson. Au moins un ventilateur force l'air à circuler du caisson vers les buses.

L'invention concerne en premier lieu un dispositif de refroidissement de feuilles de verre par jets d'air émis par au moins une buse en forme de tuyau, comprenant un caisson alimentant en air ladite buse caractérisé en ce que le flux d'air éjecté par l'orifice d'éjection de la buse passe successivement par une partie conique dont la section interne diminue dans le sens du flux puis par une partie cylindrique comprenant l'orifice d'éjection dont la section interne correspond à la plus petite section interne du cône et à la section interne de l'orifice d'éjection.

La buse selon l'invention a la forme d'un tuyau en au moins deux parties. Elle comprend une partie conique dont le diamètre interne diminue dans le sens du flux d'air, suivie d'une partie cylindrique dont le diamètre interne correspond au plus petit diamètre interne du cône auquel elle est rattachée. Il s'agit d'un tuyau, c'est-à-dire une canalisation comprenant une enveloppe externe et une enveloppe interne séparées par une paroi dont l'épaisseur est généralement comprise entre 0,5 et 5 mm, plus généralement entre 0,5 et 2 mm. L'enveloppe externe a généralement la même forme générale que l'enveloppe interne du tuyau tout en étant bien entendu plus grande en raison de l'épaisseur de la paroi. Plusieurs buses sont associées dans un dispositif de soufflage pour souffler dans sensiblement la même direction. Le fait que les buses aient la forme de tuyaux implique qu'elles soient séparées les unes des autres par de l'espace libre. Généralement, il n'y a aucune pièce de liaison reliant une buse à une autre, en dehors bien entendu du caisson sur lequel les buses sont fixées de leur côté opposé à l'orifice d'éjection du gaz. Notamment, la buse peut être fixée au caisson par le grand diamètre de leur partie conique (grande base du cône). La buse peut aussi comprendre une partie tubulaire entre le caisson d'alimentation en gaz et la grande base de leur partie conique. Généralement, cette partie tubulaire présente une section interne qui n'est jamais inférieure à la section interne de la partie conique au niveau de la grande base du cône.

Le fait que les buses soient bien détachées les unes des autres procure les avantages suivants :
- l'air soufflé s'évacue facilement,
- en cas de casse d'une feuille de verre, les morceaux tombent dans ces espaces libres sans interrompre de défilement des feuilles suivantes.

L'invention concerne essentiellement les buses en forme de tuyau de longueur généralement supérieure à 50 mm et de préférence supérieure à 100 mm. Généralement, la longueur de la buse est inférieure à 300 mm. Les longueurs venant d'être données concernent la longueur totale de la buse, du caisson d'alimentation en gaz de refroidissement jusqu'à l'orifice d'éjection dudit gaz. La partie cylindrique de la buse comprenant l'orifice d'éjection du gaz est de longueur supérieure à 6 fois le diamètre de l'orifice d'éjection du gaz et de manière encore préférée supérieure à 8 fois de diamètre de l'orifice d'éjection. Généralement, la partie cylindrique de la buse est de longueur inférieure à 20 fois le diamètre de l'orifice d'éjection. Le diamètre de l'orifice d'éjection est généralement supérieur à 4 mm. L'orifice d'éjection est généralement de diamètre inférieur à 20 mm. De préférence, le diamètre de l'orifice d'éjection est compris entre 6 et 15 mm et plus généralement entre 8 et 12 mm. Bien entendu, le diamètre de l'orifice d'éjection est le diamètre interne du tuyau au niveau de l'orifice d'éjection.

La partie conique peut occuper le reste de la longueur de la buse par rapport à la partie cylindrique. Cette partie conique est généralement de longueur supérieure à 10 mm. Elle est généralement de longueur inférieure à 270 mm. Généralement, le rapport du grand diamètre de la partie conique sur le petit diamètre de la partie conique est supérieur à 1,2. Généralement, le rapport du grand diamètre de la partie conique sur le petit diamètre de la partie conique est inférieur à 4. Généralement, le grand diamètre de la partie conique est inférieur ou égal à 40 mm. Généralement, le demi-angle au sommet de la partie conique va de 7° à 35° et plus généralement de 10° à 25°.

La buse selon l'invention comprend aussi une partie tubulaire supplémentaire entre le caisson d'alimentation en gaz et la grande base de la partie conique. Généralement, cette partie tubulaire présente une section interne qui n'est jamais inférieure à la section interne de la partie conique au niveau de la grande base du cône. Généralement, cette partie tubulaire supplémentaire présente une section interne constante et égale à la section interne de la partie conique au niveau de la grande base du cône. Cette partie tubulaire supplémentaire peut avoir une forme non linéaire de façon à pouvoir placer le jet d'air au bon endroit. Notamment, on peut jouer sur la forme de cette partie tubulaire supplémentaire pour placer l'orifice d'éjection entre des rouleaux d'un lit de convoyage de feuilles de verre, ou tout du moins pour faire en sorte que l'axe de l'orifice d'éjection de la buse (ledit axe passant par la direction de soufflage par la buse) passe entre deux rouleaux de convoyage, pour que l'air de soufflage puisse ainsi atteindre directement la feuille de verre convoyée par lesdits rouleaux. Un tel lit de rouleaux de convoyage comprend une multiplicité de rouleaux dont les axes sont parallèles ou forment des angles généralement inférieurs à 30°C (angles entre axes de rouleaux voisins). Généralement, la longueur de cette partie tubulaire supplémentaire (longueur mesurée le long de son profil, c'est-à-dire remise à l'état droit si elle est non linéaire) est inférieure à 10 fois son diamètre interne.

Les valeurs de diamètre données plus haut sont des diamètres équivalents (diamètre du cercle de même surface) pour le cas ou le tuyau n'aurait pas partout une section circulaire. Cependant, généralement, le tuyau (buse) est de section circulaire sur toute sa longueur.

Les feuilles de verre peuvent notamment être refroidies au défilé par l'air soufflé par les buses selon l'invention. Notamment, les feuilles de verre peuvent défiler à la vitesse de 100 à 600 mm par seconde.

Généralement, l'orifice d'éjection de l'air est à une distance du verre correspondant à 0,5 à 10 fois le diamètre dudit orifice d'éjection.

L'invention concerne aussi un procédé de préparation d'une feuille de verre comprenant le chauffage de ladite feuille puis son refroidissement par le dispositif selon l'invention. Notamment le refroidissement procure un durcissement, notamment lorsqu'il est une trempe. La feuille de verre peut défiler pendant l'émission d'air.

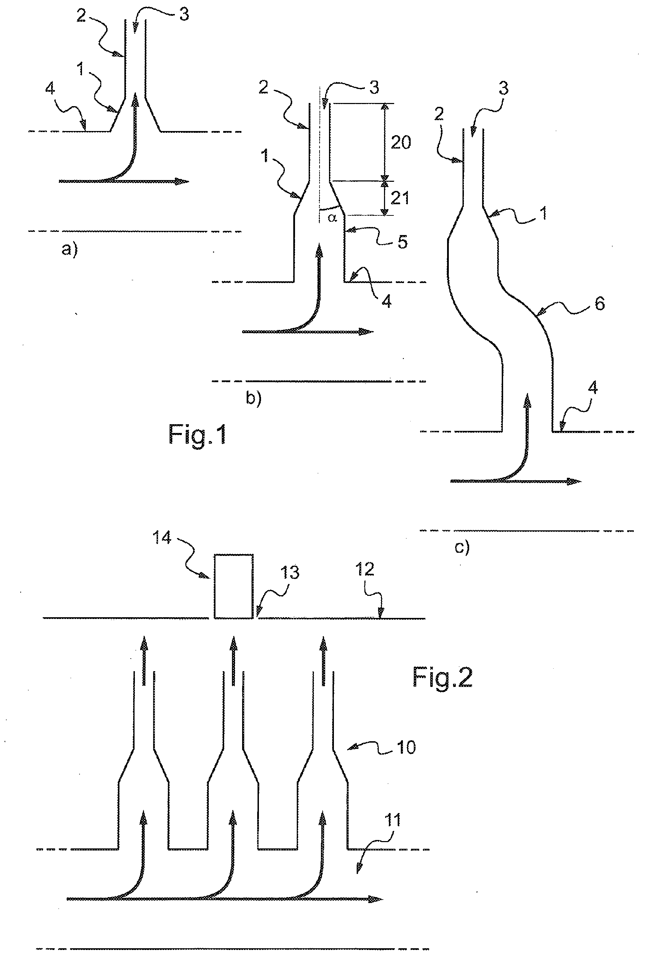

Les figures 1b et 1c représentent différentes buses selon l'invention, la figure 1a ne la représente pas. Ces buses consistent en un tuyau comprenant une partie conique 1 suivie d'une partie cylindrique 2. L'air est évacué vers le verre par l'orifice d'éjection 3. La buse est fixée sur un caisson 4. Dans le cas de la buse de la figure 1a), la buse est fixée sur le caisson 4 au niveau de la grande base de sa partie conique. Dans le cas de la buse de la figure 1b), une partie cylindrique (ou tubulaire) supplémentaire 5 précède la partie conique sur le chemin de l'air. Le diamètre interne de cette partie cylindrique supplémentaire 5 correspond au diamètre interne de la grande base du cône de la partie conique (il en est donc de même des sections internes). On à représenté pour la buse de la figure 1b) ce que l'on entend par longueur 20 de la partie cylindrique et par longueur 21 de la partie conique ainsi que par demi-angle au sommet alpha de la partie conique, lequel va généralement de 7° à 35° et plus généralement de 10° à 25°. Dans le cas de la buse de la figure 1c), une partie tubulaire supplémentaire non linéaire 6 précède la partie conique sur le chemin de l'air. La section interne de cette partie tubulaire supplémentaire 6 est constante et correspond à la section interne de la grande base du cône de la partie conique. On peut jouer sur la forme de cette partie tubulaire supplémentaire 6 pour arriver à placer l'orifice d'éjection entre deux rouleaux de convoyage d'un lit de rouleaux de convoyage de feuilles de verre. Les flèches dans le caisson 4 représentent la circulation de l'air de refroidissement.

La figure 2 représente le dispositif utilisé pour mesurer l'efficacité de la buse selon l'invention, notamment dans le cadre des exemples 1 à 3. Trois buses 10 sont alimentées en air à la température ambiante par le même caisson 11. L'air est soufflé sur une plaque métallique 12 chauffée et équipée d'un capteur fluxmétrique 14 occupant un orifice 13 ménagé dans la plaque 12. Le capteur fluxmétrique 14 vient à fleur de la plaque 12. Ce dispositif permet d'estimer le coefficient d'échange thermique entre l'air soufflé et la plaque.

Les dispositifs représentés aux figures 1 et 2 ne sont pas à l'échelle.

### EXEMPLES 1 à 3

On compare trois buses de formes différentes dans leur efficacité à refroidir une surface. Ces buses avaient la forme suivante :
1. buse selon l'invention combinant, dans l'ordre de passage du gaz de refroidissement (dans le sens : du caisson d'alimentation en air vers l'orifice d'éjection), un cône de longueur 110 mm et de diamètre interne de sortie 10 mm et de diamètre interne d'entrée 22 mm, suivi d'un cylindre de longueur 110 mm et de diamètre interne 10 mm ;
2. buse selon l'art antérieur ; buse droite constituée d'un cylindre de diamètre interne 10 mm et de longueur 220 mm (exemple comparatif) ;
3. buse selon l'art antérieur ; buse conique constituée d'un cône de longueur 220 mm dont le diamètre de l'orifice de sortie fait 10 mm et le diamètre d'entrée de l'air fait 22 mm (exemple comparatif) ;

Pour chaque essai, on a monté une vingtaine de buses de même forme perpendiculairement sur une plaque fermant un caisson alimenté en air par un ventilateur. Les buses formaient des lignes et étaient distantes entre elles et dans une ligne, de 40 mm (d'axe à axe). Les lignes étaient distantes entre elles de 60 mm et disposées de sorte que les buses forment des quinconces. La pression d'air dans le caisson était de 2500 mm de colonne d'eau (mmCE). L'air était soufflé perpendiculairement sur une plaque en acier munie d'un capteur fluxmétrique thermique. Le capteur fluxmétrique était monté à fleure de la plaque (ne venant pas en saillie de la plaque). On a ensuite déplacé la plaque (et donc le capteur fluxmétrique également) dans une direction transversale par rapport à la direction du flux d'air pour mesurer l'efficacité du refroidissement en fonction de la distance par rapport à l'axe de soufflage.

Les résultats sont rassemblés dans le tableau 1. Ils sont donnés pour des distances de 0, de 8 et de 16 mm à partir du centre de l'ensemble des buses. Les valeurs sont des valeurs de coefficient d'échange thermique en W/m²K (flux thermique / différence entre la température de l'air et la température de la surface de la plaque).

| Ex N° | Forme des buses | 0 mm | 8 mm | 16 mm |
|---|---|---|---|---|
| 1 | Buse droite+conique | 775 | 700 | 830 |
| 2 (comp) | Buse droite | 750 | 650 | 740 |
| 3 (comp) | Buse conique | 650 | 600 | 720 |

### EXEMPLES 4 à 6

On a équipé six caissons de trempe de 160 buses sur chaque caisson. Trois caissons formaient un premier groupe pour souffler sur la face supérieure des feuilles et trois caissons formaient un second groupe pour souffler sur la face inférieure des feuilles. Les feuilles étaient entrainées horizontalement pour passer entre les deux groupes de caissons par un lit de rouleaux.

On a comparé les deux formes de buses suivantes dans deux essais séparés :
a) exemple 4 : buse selon l'invention combinant (dans l'ordre de passage du gaz de refroidissement) un cône de hauteur 20 mm et de diamètre de sortie 10 mm et de diamètre d'entrée 16 mm, suivi d'un cylindre de longueur 110 mm et de diamètre 10 mm ; en amont du cône se trouvait un cylindre de diamètre 16 mm et de longueur 90 mm ; le rapport de la longueur du cylindre sur le diamètre d'éjection est donc de 11.
b) exemple 5 (exemple comparatif): buse selon l'art antérieur ; buse droite constituée d'un cylindre de diamètre interne 10 mm et de longueur 220 mm ;
c) exemple 6 (exemple comparatif): buse combinant (dans l'ordre de passage du gaz de refroidissement) un cône de hauteur 50 mm et de diamètre de sortie 10 mm et de diamètre d'entrée 16 mm, suivi d'un cylindre de longueur 50 mm et de diamètre 10 mm ; en amont du cône se trouvait un cylindre de diamètre 16 mm et de longueur 120 mm ; le rapport de la longueur du cylindre sur le diamètre d'éjection est donc de 5.

Les buses étaient disposées en quinconces. La pression d'air dans les caissons était de 2700 mm de colonne d'eau (mmCE).

Les feuilles de verre étaient de dimension 50 x 50 cm, avec une épaisseur de 3,15 mm. Elles arrivaient entre les caissons supérieurs et inférieurs à 630°C et à la vitesse de 230 mm par seconde. La zone de refroidissement occupée par les caissons était de 1 m à l'horizontale. L'orifice d'éjection de l'air des buses était à 20 mm du verre.

Après la trempe, on effectue un test de fragmentation sur les feuilles trempées selon la norme ECE R43. Pour avoir le même nombre de fragments, on peut gagner 6% en vitesse de rotation dans le cas des buses selon l'invention si l'on compare aux buses des exemples 5 et 6. Cela fait gagner 25% d'énergie électrique. Si l'on choisit de garder la même vitesse de ventilateur, on observe environ 60% de fragments en plus dans le cas des buses selon l'invention en test de rupture. Les exemples 5 et 6 mènent sensiblement aux mêmes résultats.

## Revendications

1. Dispositif de refroidissement de feuilles de verre par jets d'air émis par au moins une buse en forme de tuyau, comprenant un caisson (4) alimentant en air ladite buse, le flux d'air éjecté par l'orifice d'éjection (3) de la buse passant successivement par une partie conique (1) dont la section interne diminue dans le sens du flux puis par une partie cylindrique (2) comprenant l'orifice d'éjection (3) dont la section interne correspond à la plus petite section interne du cône et à la section interne de l'orifice d'éjection, **caractérisé en ce que** la partie cylindrique (2) de la buse est de longueur supérieure à 6 fois le diamètre de l'orifice d'éjection et **en ce que** la buse comprend une partie tubulaire (5, 6) supplémentaire située entre la grande base de la partie conique (1) et le caisson (4).

2. Dispositif selon la revendication précédente **caractérisé en ce que** la partie cylindrique (2) de la buse est de longueur supérieure à 8 fois le diamètre de l'orifice d'éjection (3).

3. Dispositif selon l'une des revendications précédentes **caractérisé en ce que** la partie cylindrique (2) de la buse est de longueur inférieure à 20 fois le diamètre de l'orifice d'éjection (3).

4. Dispositif selon l'une des revendications précédentes **caractérisé en ce que** le diamètre de l'orifice d'éjection (3) est supérieur à 4 mm et inférieur à 20 mm.

5. Dispositif selon la revendication précédente **caractérisé en ce que** le diamètre de l'orifice d'éjection (3) est compris entre 6 et 15 mm

6. Dispositif selon la revendication précédente **caractérisé en ce que** la partie conique (1) est de longueur supérieure à 10 mm.

7. Dispositif selon l'une des revendications précédentes **caractérisé en ce que** la partie conique (1) est de longueur inférieure à 270 mm.

8. Dispositif selon l'une des revendications précédentes **caractérisé en ce que** le demi-angle au sommet de la partie conique (1) va de 7° à 35°.

9. Dispositif selon la revendication précédente **caractérisé en ce que** le demi-angle au sommet de la partie conique (1) va de 10° à 25°.

10. Dispositif selon l'une des revendications précédentes **caractérisé en ce que** la partie tubulaire supplémentaire (6) est non linéaire.

11. Dispositif selon l'une des revendications précédentes **caractérisé en ce qu'**il comprend une multiplicité de ladite buse (10).

12. Dispositif selon l'une des revendications précédentes **caractérisé en ce qu'**il comprend un lit de rouleaux de convoyage des feuilles de verre, l'axe de l'orifice d'éjection (3) passant entre deux rouleaux.

13. Procédé de préparation d'une feuille de verre comprenant le chauffage de ladite feuille puis son refroidissement par émission d'air par le dispositif de l'une des revendications précédentes.

14. Procédé selon la revendication précédente, **caractérisé en ce que** le refroidissement procure un durcissement.

15. Procédé selon la revendication précédente, caractérisé en ce le refroidissement est une trempe.

16. Procédé selon l'une des revendications précédentes de procédé, **caractérisé en ce que** la feuille défile pendant l'émission d'air.

## Patentansprüche

1. Vorrichtung zum Abkühlen von Glasscheiben mittels Luftstrahlen, die durch wenigstens eine rohrförmige Düse abgegeben werden, umfassend einen Kasten (4), der die Düse mit Luft beaufschlagt, wobei der über die Ausstoßöffnung (3) der Düse ausgestoßene Luftstrom nacheinander über einen konischen Teil (1), dessen Innenquerschnitt in Richtung des Stromes abnimmt, dann über einen die Ausstoßöffnung (3) umfassenden zylindrischen Teil (2), dessen Innenquerschnitt dem kleinsten Innenquerschnitt des Konus und dem Innenquerschnitt der Ausstoßöffnung entspricht, gelangt, **dadurch gekennzeichnet, dass** der zylindrische Teil (2) der Düse eine Länge aufweist, die größer als das 6-fache des Durchmessers der Ausstoßöffnung ist, und dass die Düse einen zusätzlichen rohrförmigen Teil (5, 6) umfasst, der zwischen der Grundfläche des konischen Teils (1) und dem Kasten (4) gelegen ist.

2. Vorrichtung nach dem vorhergehenden Anspruch, **dadurch gekennzeichnet, dass** der zylindrische Teil (2) der Düse eine Länge aufweist, die größer als das 8-fache des Durchmessers der Ausstoßöffnung (3) ist.

3. Vorrichtung nach einem der vorhergehenden Ansprüche, **dadurch gekennzeichnet, dass** der zylindrische Teil (2) der Düse eine Länge aufweist, die kleiner als das 20-fache des Durchmessers der Ausstoßöffnung (3) ist.

4. Vorrichtung nach einem der vorhergehenden Ansprüche, **dadurch gekennzeichnet, dass** der Durchmesser der Ausstoßöffnung (3) größer als 4 mm und kleiner als 20 mm ist.

5. Vorrichtung nach dem vorhergehenden Anspruch, **dadurch gekennzeichnet, dass** der Durchmesser der Ausstoßöffnung (3) zwischen 6 und 15 mm beträgt.

6. Vorrichtung nach dem vorhergehenden Anspruch, **dadurch gekennzeichnet, dass** der konische Teil (1) eine Länge von mehr als 10 mm aufweist.

7. Vorrichtung nach einem der vorhergehenden Ansprüche, **dadurch gekennzeichnet, dass** der konische Teil (1) eine Länge von weniger als 270 mm aufweist.

8. Vorrichtung nach einem der vorhergehenden Ansprüche, **dadurch gekennzeichnet, dass** der Halbwinkel an der Spitze des konischen Teils (1) 7° bis 35° beträgt.

9. Vorrichtung nach dem vorhergehenden Anspruch, **dadurch gekennzeichnet, dass** der Halbwinkel an der Spitze des konischen Teils (1) 10° bis 25° beträgt.

10. Vorrichtung nach einem der vorhergehenden Ansprüche, **dadurch gekennzeichnet, dass** der zusätzliche rohrförmige Teil (6) nicht linear ist.

11. Vorrichtung nach einem der vorhergehenden Ansprüche, **dadurch gekennzeichnet, dass** sie eine Vielzahl der Düse (10) umfasst.

12. Vorrichtung nach einem der vorhergehenden Ansprüche, **dadurch gekennzeichnet, dass** sie ein Bett von Rollen zum Befördern der Glasscheiben umfasst, wobei die Achse der Ausstoßöffnung (3) zwischen zwei Rollen hindurch läuft.

13. Verfahren zur Herstellung einer Glasscheibe, umfassend das Erhitzen der Scheibe, anschließend deren Abkühlen durch Ausstrahlen von Luft mittels der Vorrichtung von einem der vorhergehenden Ansprüche.

14. Verfahren nach dem vorhergehenden Anspruch, **dadurch gekennzeichnet, dass** das Abkühlen eine Härtung bewirkt.

15. Verfahren nach dem vorhergehenden Anspruch, **dadurch gekennzeichnet, dass** das Abkühlen ein Vorspannen ist.

16. Verfahren nach einem der vorhergehenden Verfahrensansprüche, **dadurch gekennzeichnet, dass** die Scheibe während des Luftausstrahlens vorbeiläuft.

## Claims

1. A device for cooling sheets of glass by jets of air emitted by at least one nozzle in the form of a pipe, comprising a box (4) supplying said nozzle with air, the airflow ejected via the ejection orifice (3) of the nozzle passing successively through a conical part (1), of which the internal section is reduced in the flow direction and then through a cylindrical part (2) comprising the ejection orifice (3), of which the internal section corresponds to the smallest internal section of the cone and to the internal section of the ejection orifice, **characterized in that** the cylindrical part (2) of the nozzle has a length which is greater than 6 times the diameter of the ejection orifice, and **in that** the nozzle comprises an additional tubular part located between the large base of the conical part (1) and the box (4).

2. The device as claimed in the preceding claim, **characterized in that** the cylindrical part (2) of the nozzle has a length which is greater than 8 times the diameter of the ejection orifice (3).

3. The device as claimed in one of the preceding claims, **characterized in that** the cylindrical part (2) of the nozzle has a length which is less than 20 times the diameter of the ejection orifice (3).

4. The device as claimed in one of the preceding claims, **characterized in that** the diameter of the ejection orifice (3) is greater than 4 mm and less than 20 mm.

5. The device as claimed in the preceding claim, **characterized in that** the diameter of the ejection orifice (3) ranges between 6 and 15 mm.

6. The device as claimed in the preceding claim, **characterized in that** the conical part (1) has a length which is greater than 10 mm.

7. The device as claimed in one of the preceding claims, **characterized in that** the conical part (1) has a length which is less then 270 mm.

8. The device as claimed in one of the preceding claims, **characterized in that** the half-angle at the apex of the conical part (1) is 7° to 35°.

9. The device as claimed in the preceding claim, **characterized in that** the half-angle at the apex of the conical part (1) is 10° to 25°.

10. The device as claimed in one of the preceding claims, **characterized in that** the additional tubular part (6) is non-linear.

11. The device as claimed in one of the preceding claims, **characterized in that** it comprises a plurality of said nozzles (10).

12. The device as claimed in one of the preceding claims, **characterized in that** it comprises a roller bed for conveying the sheets of glass, the axis of the ejection orifice (3) passing between two rollers.

13. A method for preparing a sheet of glass comprising the heating of said sheet, then the cooling thereof by the emission of air by the device of one of the preceding claims.

14. The method as claimed in the preceding claim, **characterized in that** hardening is obtained by the cooling process.

15. The method as claimed in the preceding claim, **characterized in that** the cooling process is a tempering process.

16. The method as claimed in one of the preceding claims of the method, **characterized in that** the sheet moves during the emission of air.
